(19) Europäisches Patentamt
European Patent Office
Office européen des brevets

(11) Veröffentlichungsnummer: **0 266 306 B1**

(12) **EUROPÄISCHE PATENTSCHRIFT**

(45) Veröffentlichungstag der Patentschrift: **08.09.93**

(51) Int. Cl.[5]: **C08G 59/56**, C08G 59/18, C09J 163/00

(21) Anmeldenummer: **87810538.6**

(22) Anmeldetag: **18.09.87**

Die Akte enthält technische Angaben, die nach dem Eingang der Anmeldung eingereicht wurden und die nicht in dieser Patentschrift enthalten sind.

# (54) Latente Epoxidzusammensetzung.

(30) Priorität: **24.09.86 GB 8622998**

(43) Veröffentlichungstag der Anmeldung:
**04.05.88 Patentblatt 88/18**

(45) Bekanntmachung des Hinweises auf die Patenterteilung:
**08.09.93 Patentblatt 93/36**

(84) Benannte Vertragsstaaten:
**AT CH DE ES FR GB IT LI NL SE**

(56) Entgegenhaltungen:
**EP-A- 0 145 654** **EP-A- 0 152 209**
**EP-A- 0 197 892** **EP-A- 0 200 678**
**FR-A- 1 239 292** **US-A- 3 200 172**

**PATENT ABSTRACTS OF JAPAN, Band 7, Nr. 181 (C-180)[1326], 10. August 1983; & JP-A-58 87 122**

**PATENT ABSTRACTS OF JAPAN, Band 3, Nr. 79 (C-51), 6. Juli 1979; & JP-A-54 54 199**

(73) Patentinhaber: **CIBA-GEIGY AG**
**Klybeckstrasse 141**
**CH-4002 Basel(CH)**

(72) Erfinder: **Andrews, Christopher Michael**
**192, Vinery Road**
**Cambridge CB1 3DS(GB)**
Erfinder: **Bagga, Madan Mohan, Dr.**
**56, Hurrell Road**
**Cambridge CB4 3RH(GB)**

(74) Vertreter: **Sharman, Thomas et al**
**CIBA-GEIGY PLC. Patent Department, Central Research, Hulley Road**
**Macclesfield, Cheshire SK10 2NX (GB)**

**EP 0 266 306 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft härtbare Stoffgemische, die sich besonders als Klebstoffe eignen, sowie die Hitzehärtung solcher Stoffgemische.

Härtbare Stoffgemische enthaltend Epoxidharze und Härtungsmittel (Härter) werden seit mehreren Jahrzehnten verwendet. Viele der dabei eingesetzten Härter reagieren bereits bei Raumtemperatur mit dem Epoxidharz und müssen daher unmittelbar vor der Verwendung mit diesem vermischt werden. Andere sogenannte latente Härter sind bei Raumtemperatur im Gemisch mit Epoxidharzen stabil und wirken erst beim Erhitzen über eine bestimmte "Schwellentemperatur" als Härter.

In den US-A-3,519,576 und US-A-3,520,905 werden Salze von monomeren mehrwertigen Phenolen mit Polyaminen als latente Härter für Epoxidharze beschrieben. Danach werden als Polyaminkomponenten diejenigen Verbindungen bevorzugt, die als freie Amine eingesetzt, eine rasche Härtung bei Raumtemperatur bewirken; dazu zählen beispielsweise 1,3-Propandiamin, Ethylendiamin, Diethylentriamin und Triethylentetramin.

Geeignete mehrwertige Phenole sind Resorcin, Bisphenol-A [2,2-Bis-(4-hydroxyphenyl)propan] und 4,4'-Dihydroxybiphenyl.

Klebstoffmischungen enthaltend ein festes Epoxidharz, ein Salz aus einem Mol von Ethylendiamin, 1 Mol Bisphenol A und 2 g N,N'-Dimethyl-1,3-diaminopropan, ein ABS Pfropfpolymer und ein Copolymer auf Basis von Ethylen, Acrylsäure und einem Acrylat werden in der GB Patentschrift 1,556,988 beschrieben. Die Mischungen sind bei Temperaturen zwischen 80 und 100 °C härtbar und eignen sich besonders zum Verkleben von Kunststoffen mit niedrigen Erweichungspunkten.

Es besteht weiterhin ein Bedarf nach latent härtbaren, flüssigen Epoxidmischungen, die neben einer verlängerten Lagerstabilität auch eine rasche Härtung im Temperaturbereich zwischen 60 bis 120 °C aufweisen.

Es wurde jetzt gefunden, dass man solche Mischungen erhalten kann, indem man als latenten Härter eine feste Lösung aus einem polymeren mehrwertigen Phenol und einem Polyamin einsetzt.

Die Bereitstellung von Einkomponenten-Klebstofformulierungen mit einer ausgedehnten Lagerstabilität, die gleichzeitig aber bei niedrigen Temperaturen rasch aushärten, stellt ein schwieriges technisches Problem dar; denn die Lagerstabilität und die rasche Härtbarkeit flüssiger Epoxidzusammensetzungen sind eigentlich einander widersprechende Eigenschaften.

In den GB-A-872,797 und US-A-3,200,172 werden feste Lösungen von Novolaken mit Aminen als Härter für feste Epoxidzusammensetzungen vorgeschlagen. Diese Zusammensetzungen lassen sich als pulvrige Pressmassen einsetzen. Es gibt jedoch keinen Vorschlag, diese Lösungen auch als Härter in flüssigen Epoxidzusammensetzungen zu verwenden.

Die vorliegende Erfindung betrifft latent härtbare, flüssige Zusammensetzungen enthaltend

A) ein bei 25 °C flüssiges Epoxidharz, und

B) mehr als 10 Gew.%, bezogen auf die Menge an A), einer festen Lösung aus einem polymeren Phenol und einem Polyamin mit wenigstens zwei Aminogruppen, wovon wenigstens eine dieser Gruppen eine primäre Aminogruppe ist, als Härter für A), mit der Massgabe, dass besagte feste Lösung als Pulver in besagtem Epoxidharz dispergiert ist.

Der Begriff "feste Lösung" umfasst eine Kombination des Polyamins und des polymeren Phenols in einer einzigen festen Phase. Es ist möglich, dass ein gewisser Anteil beider Komponenten in Salzform vorliegt. Ferner ist es möglich, dass eine Wasserstoffbrückenbindung zwischen den Komponenten besteht.

Solche feste Lösungen werden in der Regel hergestellt, indem man nicht stöchiometrische Mengen beider Komponenten kombiniert; deshalb wird eine Komponente in der Regel im Ueberschuss vorliegen.

Der Begriff "feste Lösung" umfasst alle möglichen Kombinationen, ob es sich nun um Salze des Polyamins mit dem phenolischen Polymer handelt oder ob eine der Komponenten im Ueberschuss vorliegt.

Die Epoxidharze der Komponente A) enthalten vorzugsweise wenigstens zwei Gruppen der Formel I

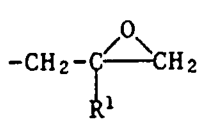

(I)

die direkt an ein Atom oder Atome ausgewählt aus der Gruppe bestehend aus Sauerstoff, Stickstoff oder Schwefel gebunden sind, worin $R^1$ Wasserstoff oder Methyl ist.

Beispiele solcher Harze sind Polyglycidyl- und Poly(beta-methylglycidyl)ester, welche durch Umsetzung einer Verbindung mit zwei oder mehr Carboxylgruppen pro Molekül mit Epichlorhydrin, Glycerindichlorhydrin oder Beta-methylepichlorhydrin in Anwesenheit von Basen erhalten werden. Solche Polyglycidylester können sich ableiten von aliphatischen Carbonsäuren, wie z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure; von cycloaliphatischen Polycarbonsäuren, wie z.B. Tetrahydrophthalsäure, 4-Methyltetrahydrophthalsäure, Hexahydrophthalsäure und 4-Methylhexahydrophthalsäure; und von aromatischen Polycarbonsäuren, wie z.B. Phthalsäure, Isophthalsäure und Terephthalsäure.

Weitere Beispiele von Epoxidharzen sind Polyglycidyl- und Poly(beta-methylglycidyl)ether, welche durch Umsetzung einer Verbindung mit mindestens zwei freien alkoholischen und/oder phenolischen Hydroxylgruppen pro Molekül mit dem geeigneten Epichlorhydrin unter basischen Bedingungen, oder in Gegenwart eines sauren Katalysators gefolgt von Behandlung mit Base, erhältlich sind. Solche Ether können hergestellt werden aus acyclischen Alkoholen, wie z.B. Ethylenglykol, Diethylenglykol und höheren Poly(oxyethylen)glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen; aus cycloaliphatischen Alkoholen, wie z.B. Resorcit, Chinit, Bis(4-hydroxycyclohexyl)methan, 2,2-Bis(4-hydroxycyclohexyl)propan und 1,1-Bis-(hydroxymethyl)cyclohex-3-en; und aus aromatische Kerne enthaltenden Alkoholen, wie z.B. N,N-Bis(2-hydroxyethyl)anilin und p,p′-Bis(2-hydroxyethylamino)diphenylmethan. Sie können auch hergestellt werden aus einkernigen Phenolen, wie z.B. Resorcin und Hydrochinon; aus mehrkernigen Phenolen, wie z.B. Bis(4-hydroxyphenyl)methan, 4,4′-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)-propan; sowie aus Novolaken niedrigen Molekulargewichtes, die sich ableiten von Aldehyden, wie Formaldehyd, Acetaldehyd, Chloral und Furfuraldehyd, und Phenolen, wie Phenol und von Phenolen, die im Ring durch Chloratome oder durch bis zu neun Kohlenstoffatome enthaltende Alkylgruppen substituiert sind, wie z.B. 4-Chlorphenol, 2-Methylphenol, und 4-tert.Butylphenol.

Poly(N-glycidyl)verbindungen umfassen z.B. solche, die durch Dehydrochlorierung der Reaktionsprodukte von Epichlorhydrin mit mindestens zwei Aminwasserstoffatome enthaltenden Aminen erhältlich sind. Beispiele für Amine sind Anilin, n-Butylamin, Bis(4-aminophenyl)methan, m-Xylylendiamin und Bis(4-methylaminophenyl)methan; Triglycidylisocyanurat; N,N′-Diglycidylderivate von cyclischen Alkylenharnstoffen, wie z.B. Ethylenharnstoff und 1,3-Propylenharnstoff, und Hydantoine, wie 5,5-Dimethylhydantoin.

Beispiele von Poly(S-glycidyl)verbindungen sind Di-S-glycidylderivate von Dithiolen, wie z.B. von Ethan-1,2-dithiol und Bis(4-mercapto-methylphenyl)ether.

Es können auch Epoxidharze, welche die 1,2-Epoxidgruppen an verschiedene Heteroatome gebunden haben, verwendet werden. Beispiele dafür sind das N,N,O-Triglycidylderivat von 4-Aminophenol, der Glycidylether-Glycidylester der Salicylsäure, N-Glycidyl-N′-(2-glycidyloxypropyl)-5,5-dimethylhydantoin und 2-Glycidyloxy-1,3-bis(5,5-dimethyl-1-glycidylhydantoin-3-yl)propan.

Falls gewünscht, kann auch ein Gemisch von Epoxidharzen verwendet werden.

Bevorzugt werden Polyglycidylether, Polyglycidylester, N,N′-Diglycidylhydantoine, und Poly(N-glycidyl)-derivate von aromatischen Aminen.

Spezifische bevorzugte Harze sind Polyglycidylether von 2,2-Bis(4-hydroxyphenyl)propan, von Bis(4-hydroxyphenyl)methan oder von einem Novolak niedrigen Molekulargewichts, der sich ableitet von Formaldehyd und Phenol oder von einem Phenol, das mit einem Chloratom oder mit einer bis zu neun C-Atome enthaltenden Alkylgruppe substituiert ist, wobei besagter Novolak einen Epoxidgehalt von mindestens 0,5 Aequivalenten pro Kilogramm aufweist; oder Bis(4-(diglycidylamino)phenyl)methan und p-(Diglycidylamino)-phenyl-glycidylether.

Die feste Lösung B), die in den erfindungsgemässen Zusammensetzungen als Härter eingesetzt wird, wird vor dem Vermischen mit der Komponente A) hergestellt und pulverisiert.

Versuche besagte feste Lösung in situ in der Epoxidmischung herzustellen führen in der Regel zu Gemischen mit nicht ausreichender Lagerstabilität.

Bei den polymeren Phenolen, die zur Herstellung der festen Härterlösung B) verwendet werden, handelt es sich in der Regel um Verbindungen, die im Mittel wenigstens zwei widerkehrende Struktureinheiten mit wenigstens einer phenolischen Hydroxylgruppe pro Einheit aufweisen. Bei solchen polymeren Materialien handelt es sich vorzugsweise um Homopolymere oder um Copolymere eines Phenols, das eine polymerisierbare, ethylenisch ungesättigte Gruppe als Substituenten trägt, oder um phenolische Novolake.

Beispiele für Polymere auf Basis ungesättigter Phenole sind Homopolymere von allylsubstituierten Phenolen, beispielsweise von 2-Allylphenol oder 4-Allylphenol; Homopolymere von Phenolen, die Substituenten mit Acrylgruppen tragen, beispielsweise von Phenolen, die erhältlich sind durch Umsetzung eines

Säurehalogenids einer Carbonsäure enthaltend einen phenolhaltigen Rest, wie Salicylsäure oder p-Hydroxybenzoesäure, mit einem Hydroxyalkylacrylat oder -methacrylat, wie 2-Hydroxyethylmethacrylat; Homopolymere von vinyl- oder 1-propenylsubstituierten Phenolen, beispielsweise von o-Vinylphenol, m-Vinylphenol, p-Vinylphenol und deren halogenierten Derivaten, oder von o-(1-Propenyl)-phenol, m-(1-Propenyl)-phenol, p-(1-Propenyl)-phenol und deren halogenierten Derivaten; sowie von Copolymeren, die sich von den oben erwähnten monomeren Phenolen und einem weiteren polymerisierbaren ethylenisch ungesättigten Material ableiten, beispielsweise von einem Styrol, wie Styrol selbst, α-Methylstyrol, 4-Bromstyrol oder 4-Methylstyrol, von einem Acrylester, wie Alkylacrylat oder -methacrylat, oder einem Hydroxyalkylacrylat oder -methacrylat, oder einem Vinylester, wie Vinylacetat; sowie Mischungen von zwei oder mehreren der obenerwähnten Homopolymeren und/oder Copolymeren.

Die Homo- oder -copolymeren von ungesättigten Phenolen können in Analogie zu konventionellen Polymerisationsverfahren hergestellt werden; dabei geht man entweder von den ungesättigten Phenolen selbst aus oder von ihren Estern oder Ethern.

Setzt man die Ester oder die Ether ein, so kann man die resultierenden Polymeren hydrolysieren, um die Ester- oder die Ethergruppen in die freien phenolischen Hydroxylgruppen zu überführen.

Zu den bevorzugten Polymeren, die sich von ungesättigten Phenolen ableiten, zählen die Verbindungen der Formel II

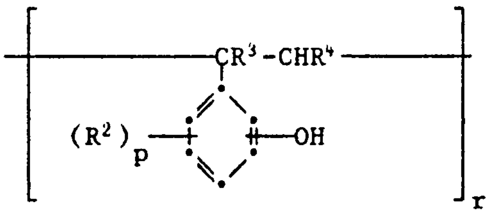

(II),

worin $R^2$ ein Halogenatom ist oder Hydroxyl, Alkyl, Alkoxy, Aryl, Aralkyl oder Hydroxyalkyl darstellt,
$R^3$ und $R^4$ unabhängig voneinander Wasserstoff oder geradkettiges oder verzweigtes $C_1$-$C_4$-Alkyl bedeuten,
p 0 oder eine ganze Zahl von 1 bis 4 ist, und
r eine ganze Zahl ist, so dass das mittlere Molekulargewicht des Polymeren im Bereich von 1'500 bis 30'000 liegt.

Bevorzugte polymere Phenole der Formel II sind Verbindungen, worin $R^2$ ein Halogenatom ist, $R^3$ und $R^4$ Wasserstoff darstellen und p 0 oder 1 ist.

Die -OH Gruppe in Formel II ist vorzugsweise in para-Position zum Rest $-CR^3-CHR^4-$ gebunden.

Diese polymeren Phenole sind kommerziell erhältlich.

Weitere bevorzugte Polymere von ungesättigten Phenolen sind Copolymere enthaltend Einheiten der Formel III

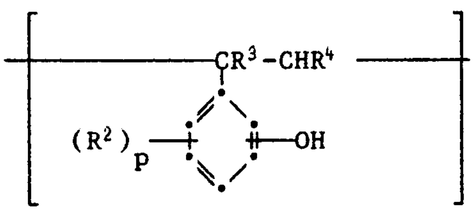

(III),

worin $R^2$, $R^3$, $R^4$ und p die oben definierte Bedeutung besitzen und enthaltend Einheiten, die sich von Alkyl- oder Hydroxyalkylacrylaten oder -methacrylaten ableiten, wobei diese Copolymeren im allgemeinen ein mittleres Molekulargewicht von 1'500 bis 30'000 besitzen.

Beispiele für solche Copolymere sind Verbindungen enthaltend Struktureinheiten der Formel III, worin $R^2$ ein Halogenatom ist, $R^3$ und $R^4$ Wasserstoff darstellen und p 0 oder 1 bedeutet und enthaltend Struktureinheiten, die sich von Methylmethacrylat oder von Hydroxyethylmethacrylat als Comonomer ableiten.

Geeignete phenolische Novolakharze leiten sich von einem einkernigen Phenol, beispielsweise von Phenol selbst oder einem alkylsubstituierten einkernigen Phenol ab, und von einem Aldehyd, wie Acetaldehyd, Benzaldehyd, Furfuraldehyd oder, ganz besonders bevorzugt, Formaldehyd.

Besonders bevorzugte Novolake von einkernigen Phenolen besitzen die Formel IV

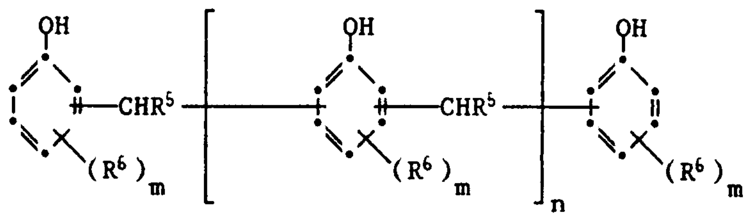

(IV),

worin

$R^5$ ein Wasserstoffatom, Alkyl oder Aryl bedeutet,

$R^6$ $C_1$-$C_{10}$-Alkyl bedeutet,

m für Null oder eine Zahl von 1 bis 3 steht und

n eine solche Zahl darstellt, dass der Durchschnittswert zwischen 1 und 20 liegt.

Bevorzugte polymere Phenole der Formel IV sind solche Verbindungen, worin n einen Mittelwert von 1 bis 10 annimmt, $R^5$ Wasserstoff ist und m 0 bedeutet, in diesem Fall ist $R^6$ abwesend, oder worin m 1 ist, und $R^6$ $C_1$-$C_4$-Alkyl bedeutet oder worin m für einige der aromatischen Ringe in Formel IV 0 ist und für den Rest 1 bedeutet, wobei $R^6$ $C_1$-$C_4$-Alkyl ist.

Ganz besonders bevorzugte Novolakharze auf Basis von einkernigen Phenolen und Aldehyden leiten sich von Phenol und Formaldehyd oder von p-Kresol und Formaldehyd ab.

Weitere geeignete phenolische Novolakharze sind diejenigen Verbindungen, die sich von einem mehrkernigen Phenol, insbesondere von einem Bisphenol, und von einem Aldehyd, wie Acetaldehyd, Benzaldehyd, Furfuraldehyd oder insbesondere Formaldehyd, ableiten. Geeignete Bisphenole für solche Harze sind beispielsweise Bis-(4-hydroxyphenyl)-methan, 4,4′-Dihydroxybiphenyl, Bis-(4-hydroxyphenyl)-sulfon, 4,4′-Dihydroxybenzophenon und insbesondere 2,2-Bis-(4-hydroxyphenyl)-propan (Bisphenol-A).

Ein ganz besonders bevorzugter Bisphenol-Aldehyd Novolak ist derjenige auf Basis von Bisphenol-A und Formaldehyd.

Zusammensetzungen enthaltend eine feste Lösung aus einem Bisphenol-Novolakharz als phenolischer Komponente weisen die überraschende Kombination von verlängerter Lagerstabilität und einer raschen Aushärtung bei niedrigen Temperaturen ab 60 °C auf.

Polyamine, die sich als Polyaminkomponente in der festen Lösung B) eignen, besitzen in der Regel wenigstens zwei Aminogruppen, die zusammen wenigstens zwei, vorzugsweise wenigstens drei, aktive Wasserstoffatome aufweisen; dabei ist wenigstens eine Aminongruppe eine primäre Aminogruppe.

Davon werden insbesondere diejenigen Amine bevorzugt, die wenigstens zwei primäre Aminogruppen besitzen, oder die eine primäre und wenigstens eine sekundäre Aminongruppe besitzen.

Bevorzugte Polyamine sind daher Polyalkylenpolyamine, beispielsweise Polyethylenpolyamine und Polypropylenpolyamine, wie Diethylentriamin, Triethylentetramin, Tetraethylenpentamin, Pentaethylenhexamin und Dipropylentriamin; Aralkylendiamine, wie Xylylendiamine; Aminoalkylendiamine, wie N-(2-Aminoethyl)-1,3-propandiamin, N-(3-Aminopropyl)-1,3-propandiamin und N-(2-Aminoethyl)-1,4-butandiamin; N,N-Bis-(aminoalkyl)-alkylamine, wie N,N-Bis-(2-aminoethyl)-ethylamin, N,N-Bis-(3-aminopropyl)-ethylamin und N,N-Bis-(3-Aminopropyl)-methylamin; Tris-(aminoalkyl)-amine, wie Tris-(2-aminoethyl)-amin und Tris-(3-aminopropyl)-amin; cycloaliphatische diprimäre Amine, wie Bis-(4-aminocyclohexyl)-methan, 2,2-Bis-(4-aminocyclohexyl)-propan, 2,2-Bis-(4-amino-3-methylcyclohexyl)-propan und Isophorondiamin (3-Aminomethyl-3,5,5-trimethylcyclohexylamin); N-Aminoalkylpiperazine, wie N-(2-Aminoethyl)-piperazin und N-(3-Aminopropyl)-piperazin; Polyalkylenimine, wie Polyethylenimine; und Polyaminoamide, wie beispielsweise die Verbindungen, die man durch Umsetzung von aliphatischen Polyaminen, so wie den oben erwähnten Polyalkylenpolyaminen, mit dimerisierten oder trimerisierten Fettsäuren, wie dimerisierter oder trimerisierter Linolsäure oder Rizinussäure erhält.

Ganz besonders bevorzugte Polyamine sind Diethylentriamin, Triethylentetramin, Dipropylentriamin, m-Xylylendiamin, N-(2-Aminoethyl)-1,3-propandiamin, N,N-Bis-(3-aminopropyl)-methylamin, Tris-(2-aminoethyl)-amin, Bis-(4-aminocyclohexyl)-methan, Isophorondiamin, N-(2-Aminoethyl)-piperazin, ein Polyethylenimin mit einem Molekulargewicht von 1650 bis 1950 und ein Polyaminoamid, das man durch Umsetzung von Triethylentetramin mit dimerisierter Linolsäure erhält.

Man kann auch Gemische der oben erwähnten Polyamine einsetzen.

Ein weiterer Vorteil der erfindungsgemässen Mischungen ist es, dass man auf Wunsch eine feste Lösung eines Härters, der sich von einer Mischung basischer Komponenten ableitet, verwenden kann und damit die Möglichkeit besitzt, die physikalischen Eigenschaften, wie die Flexibilität der gehärteten Mischung zu beeinflussen, indem man geeignete Amine wählt und diese in geeigneten Mischungsverhältnissen einsetzt.

Die feste Lösung B) kann auf einfache Weise hergestellt werden, indem man das polymere Phenol und das Polyamin zusammen erhitzt bis eine klare Flüssigkeit erhalten wird, und dann abkühlen lässt, so dass ein festes Produkt entsteht. Bei einem anderen Herstellungsverfahren wird das polymere Phenol in einem niederen Alkohol, üblicherweise in Methanol, Ethanol oder Isopropanol, oder in einem Kohlenwasserstoff, wie z.B. Toluol, bei Raumtemperatur oder bei leicht erhöhter Temperatur gelöst und das Polyamin, das ebenfalls in einem solchen Lösungsmittel gelöst vorliegen kann, allmählich zur erhaltenen Lösung zugegeben. Der gebildete Niederschlag wird abfiltriert, gewaschen und getrocknet. Unabhängig von der Herstellungsmethode wird das getrocknete Produkt pulverisiert, bevor es als Härter in der erfindungsgemässen Zusammensetzung verwendet wird.

In der Regel wird die feste Lösung zu einem feinen Pulver vermahlen. Dabei handelt es sich im allgemeinen um ein Pulver mit einer Teilchengrösse von weniger als 100 Mesh (0,15 mm), bevorzugt von etwa 200 Mesh (0,07 mm), bevor es mit den anderen Komponenten zur erfindungsgemässen härtbaren, flüssigen Zusammensetzung vermischt wird.

In die Zusammensetzung können auch gröbere Partikel der festen Lösung eingearbeitet werden, da durch das Vermischen der Komponenten in konventionellen Einrichtungen dafür, beispielsweise in Walzenmischern, eine Verringerung der Teilchengrösse erzielt werden kann.

Das Gewichtsverhältnis von polymerem Phenol und Polyamin in der festen Lösung B) wird so gewählt, dass ein festes, stabiles Produkt entsteht. In der Regel verwendet man 0,5:1 bis 5:1 Gewichtsteile von polymerem Phenol zu Polyamin, ganz besonders bevorzugt 1:1 bis 4:1 Gewichtsteile.

Die erfindungsgemässen härtbaren Gemische enthalten in der Regel 15 bis 150 Gew.% an fester Lösung B), bezogen auf die Menge an Epoxidharz A). Vorzugsweise beträgt die Härtermenge B) 15 bis 120 Gew.% und ganz besonders bevorzugt 20 bis 80 Gew.%.

Den erfindungsgemässen Mischungen können weitere Zusätze einverleibt werden, um die physikalischen oder chemischen Eigenschaften der gehärteten oder ungehärteten Gemische zu verbessern.

Beispiele für solche Zusätze sind Pigmente, Farbstoffe, Flexibilisatoren, Weichmacher, Füllstoffe, Thixotropiemittel oder Flammhemmer.

Ferner können geeignete polymere Verbindungen als Zähigkeitsvermittler zugegeben werden, beispielsweise Acrylester von Epoxidharzen, Polyurethan-Präpolymere, blockierte Polyisocyanate oder elastomere Butadien-Polymere.

Die erfindungsgemässen härtbaren, flüssigen Zusammensetzungen können ungefüllte Mischungen niedriger Viskosität sein, beispielsweise Mischungen enthaltend Reaktivverdünner, wie Monoglycidylether, z.B. Kresolglycidylether; es kann sich aber auch um Pasten handeln, die grosse Mengen an Füllstoffen oder anderen Zusätzen enthalten.

Die erfindungsgemässen Zusammensetzungen können durch Erhitzen auf mässig erhöhte Temperaturen gehärtet werden. So kann man beispielsweise Zusammensetzungen enthaltend eine feste Lösung B) aus einer Bisphenol-Novolak Komponente bereits bei Temperaturen von 60 °C rasch aushärten, während Zusammensetzungen enthaltend andere Härter B) bereits ab Temperaturen von 80 °C rasch aushärten.

Man kann aber auch Temperaturen bis zu 200 °C anwenden, um eine extrem schnelle Härtung durchzuführen, insbesondere mit Zusammensetzungen, die bis zu 50 Teile B) pro 100 Teile A) enthalten.

In der Regel werden die erfindungsgemässen Zusammensetzungen durch Erhitzen auf Temperaturen zwischen 60 und 200 °C, bevorzugt zwischen 80 und 150 °C und ganz besonders bevorzugt zwischen 80 und 120 °C, gehärtet.

Die Härtungsdauer kann unterhalb einer Minute liegen; der Härtungsvorgang kann aber auch länger fortgesetzt werden, beispielsweise bis zu drei Stunden, um die physikalischen Eigenschaften des gehärteten Produktes zu verbessern.

Die härtbaren Zusammensetzungen können als Beschichtungen oder als Laminierharze eingesetzt werden, insbesondere jedoch als Giessharze oder als Klebstoffe.

Die Erfindung betrifft daher auch ein Verfahren zum Verbinden und Verkleben zweier Oberflächen, dadurch gekennzeichnet, dass man eine Zusammensetzung, wie oben definiert, auf eine oder zwei der Oberflächen aufbringt, diese Oberflächen miteinander verbindet, so dass sich besagte Zusammensetzung dazwischen befindet und die entstandene Anordnung erhitzt, bis die Zusammensetzung ausgehärtet ist.

Ein solches Verfahren wird vorteilhaft angewendet, wenn man Oberflächen eines Metalls, beispielsweise von Stahl oder Aluminium, eines Kunststoffmaterials, eines Glases, eines reibungsvermittelnden Materials,

beispielsweise Bremsbeläge, oder eines keramischen Materials miteinander verbinden will.

Besonders vorteilhaft wendet man das Verfahren beim Verbinden zweier metallischer Oberflächen an.

Die folgenden Beispiele erläutern die Erfindung.

In den Beispielen werden folgende polymere Phenole zur Herstellung der Härter eingesetzt:

Polymeres Phenol I: Dies ist ein Novolak auf Basis von Bisphenol-A und Formaldehyd im molaren Verhältnis von 1:0,85. Das Produkt besitzt einen Schmelzbereich von 125-132 °C.

Polymeres Phenol II: Dies ist ein Novolak auf Basis von Phenol und Formaldehyd im molaren Verhältnis von 1:0,89. Das Produkt schmilzt im Bereich von 70-90 °C.

Polymeres Phenol III: Dies ist ein Novolak auf Basis von Bisphenol-A und Formaldehyd im molaren Verhältnis von 1:0,46. Das Produkt schmilzt bei 90 °C.

Polymeres Phenol IV: Dies ist ein Novolak auf Basis von Phenol und Formaldehyd im molaren Verhältnis von 1:0,915. Das Produkt schmilzt im Bereich von 100-110 °C.

Polymeres Phenol V: Dies ist ein Novolak auf Basis von p-Kresol und Formaldehyd im molaren Verhältnis 1:1,27. Das Produkt schmilzt im Bereich von 120-130 °C.

Polymeres Phenol VI: Hierbei handelt es sich um ein Poly-(p-vinylphenol) mit einem mittleren Molekulargewicht von 5'000 (Resin®M Grade S-2 der Fa. Maruzen Oil Co. Ltd., Tokyo, Japan).

In den Beispielen werden folgende Härter eingesetzt:

Die Härter I bis XX werden gemäss den folgenden allgemeinen Arbeitsvorschriften A oder B hergestellt.

## Allgemeine Arbeitsvorschrift A

Eine Lösung des betreffenden polymeren Phenols in einem organischen Lösungsmittel wird mit einer Lösung des betreffenden Polyamins im gleichen Lösungsmittel versetzt. Der erhaltene Niederschlag wird abfiltriert, zuerst mit dem in der Reaktionslösung verwendeten Lösungsmittel und anschliessend mit Ether gewaschen. Der Rückstand wird im Vakuum bei 50 °C getrocknet. Der erhaltene Feststoff wird zu einem feinen Pulver vermahlen.

## Allgemeine Arbeitsvorschrift B

Das betreffende polymere Phenol wird aufgeschmolzen und bei 180 °C gerührt. Das betreffende Polyamin wird allmählich zugegeben und es wird weiter gerührt, bis eine klare Flüssigkeit entstanden ist.

Die Schmelze wird auf Aluminiumfolie gegossen, erkalten gelassen und der entstandene Feststoff wird zerkleinert und dann zu einem feinen Pulver vermahlen.

Härter I: Dieser Härter wird gemäss der allgemeinen Arbeitsvorschrift A aus 40 g des polymeren Phenols I in 300 ml Isopropanol und 10 g Triethylentetramin in 50 ml Isopropanol hergestellt. Das Produkt besitzt einen Amingehalt von 5,43 Aequ./kg.

Härter II: Das Produkt wird gemäss der allgemeinen Arbeitsvorschrift B aus 100 g des polymeren Phenols II und 25 g Triethylentetramin hergestellt.

Härter III: Das Produkt wird gemäss der allgemeinen Arbeitsvorschrift B aus 100 g des polymeren Phenols II und 45 g N-(2-Aminoethyl)-piperazin hergestellt.

Härter IV: Dieser Härter wird gemäss der allgemeinen Arbeitsvorschrift A aus 5 g des polymeren Phenols I in 25 g Isopropanol und 2 g Diethylentriamin in 10 g Isopropanol hergestellt. Das Produkt besitzt einen Amingehalt von 5,18 Aequ./kg.

Härter V: Dieser Härter wird gemäss der allgemeinen Arbeitsvorschrift A aus 5 g des polymeren Phenols I in 25 g Isopropanol und aus 2 g N-(2-Aminoethyl)-1,3-propandiamin in 10 g Isopropanol hergestellt. Das Produkt besitzt einen Amingehalt von 5,05 Aequ./kg.

Härter VI: Dieser Härter wird gemäss der allgemeinen Arbeitsvorschrift A aus 5 g des polymeren Phenols I in 25 g Isopropanol und aus 2 g Dipropylentriamin in 10 g Isopropanol hergestellt. Das Produkt besitzt einen Amingehalt von 4,92 Aequ./kg.

Härter VII: Dieser Härter wird gemäss der allgemeinen Arbeitsvorschrift A aus 5 g des polymeren Phenols I in 25 g Isopropanol und aus 2 g N,N-Bis-(3-aminopropyl)-methylamin in 10 g Isopropanol hergestellt. Das Produkt besitzt einen Amingehalt von 4,92 Aequ./kg.

Härter VIII: Dieser Härter wird gemäss der allgemeinen Arbeitsvorschrift A aus 5 g des polymeren Phenols I in 25 g Isopropanol und aus 2 g Bis-(4-aminocyclohexyl)-methan in 10 g Isopropanol hergestellt. Das Produkt besitzt einen Amingehalt von 2,51 Aequ./kg.

Härter IX: Dieser Härter wird gemäss der allgemeinen Arbeitsvorschrift A aus 5 g des polymeren Phenols I in 25 g Isopropanol und aus 2 g Tris-(2-aminoethyl)-amin in 10 g Isopropanol hergestellt. Das Produkt besitzt einen Amingehalt von 4,31 Aequ./kg.

Härter X: Dieser Härter wird nach der allgemeinen Arbeitsvorschrift B aus 100 g des polymeren Phenols II und 25 g Diethylentriamin hergestellt.

Härter XI: Dieser Härter wird nach der allgemeinen Arbeitsvorschrift B aus 100 g des polymeren Phenols III und 100 g eines Polyaminoamids auf Basis von dimerisierter Linolsäure und Triethylentetramin hergestellt. Das Polyaminoamid ist kommerziell erhältlich unter der Bezeichnung Versamid®140 von der Fa. Cray Valley Products Ltd., Orpington, Kent, England.

Härter XII: Dieser Härter wird nach der allgemeinen Arbeitsvorschrift B aus 100 g des polymeren Phenols II und 25 g eines Polyethylenimins mit einem mittleren Molekulargewicht von 1650 bis 1950 (Zahlenmittel) hergestellt. Das Polyethylenimin ist kommerziell erhältlich unter der Bezeichnung Polyethylenimin PEI-18 von der Fa. Dow Chemical Company.

Härter XIII: Dieses Produkt wird gemäss der allgemeinen Arbeitsvorschrift B durch Umsetzung von 100 g des polymeren Phenols III mit 25 g Triethylentetramin erhalten.

Härter XIV: Dieses Produkt wird gemäss der allgemeinen Arbeitsvorschrift B durch Umsetzung von 75 g des polymeren Phenols IV mit 25 g m-Xylylendiamin erhalten.

Härter XV: Dieses Produkt wird gemäss der allgemeinen Arbeitsvorschrift A aus 5 g des polymeren Phenols II in 15 g Methanol und 2 g N-(2-Aminoethyl)-1,3-propandiamin in 10 g Methanol erhalten. Das Produkt besitzt einen Amingehalt von 4,25 Aequ./kg.

Härter XVI: Dieser Härter wird gemäss der allgemeinen Arbeitsvorschrift A aus 5 g des polymeren Phenols II in 15 g Methanol und 2 g Tris-(2-aminoethyl)-amin in 10 g Methanol erhalten. Das Produkt besitzt einen Amingehalt von 3,68 Aequ./kg.

Härter XVII: Dieser Härter wird gemäss der allgemeinen Arbeitsvorschrift A aus 5 g des polymeren Phenols II in 15 g Methanol und 2 g Bis-(4-aminocyclohexyl)-methan in 10 g Methanol erhalten. Das Produkt besitzt einen Amingehalt von 2,08 Aequ./kg.

Härter XVIII: Das Produkt wird gemäss der allgemeinen Arbeitsvorschrift B durch Umsetzung von 40 g des polymeren Phenols V mit 10 g Triethylentetramin hergestellt.

Härter XIX: Das Produkt wird gemäss der allgemeinen Arbeitsvorschrift B durch Umsetzung von 40 g des polymeren Phenols IV mit 10 g m-Xylylendiamin hergestellt.

Härter XX: Das Produkt wird gemäss der allgemeinen Arbeitsvorschrift B durch Umsetzung von 100 g des polymeren Phenols II mit 55 g N-(2-Aminoethyl)-piperazin hergestellt.

Härter XXI: 10 g des polymeren Phenols VI und 10 g Isophorondiamin werden bei Raumtemperatur durch Verrühren aufgeschlämmt. Das Gemisch wird unter Rühren langsam auf 140°C erwärmt. Die Mischung wird fünf Minuten lang bei 140°C gehalten und es entsteht eine klare, bewegliche Flüssigkeit. Diese wird zum Abkühlen in Aluminiumschalen gegossen. Man erhält einen spröden Feststoff, der zu einem Pulver vermahlen wird.

Härter XXII: 3 g m-Xylylendiamin werden auf 140°C erhitzt. Dazu gibt man unter Rühren in jeweils kleinen Mengen insgesamt 6 g des polymeren Phenols VI. Die Reaktionsmischung wird 15 Minuten lang auf 140°C gehalten und dann 15 Minuten auf 150°C erhitzt. Es entsteht eine klare Schmelze, die zum Abkühlen in Aluminiumschalen gegossen wird. Man erhält einen spröden Feststoff, der zu einem Pulver vermahlen wird.

Härter XXIII: Das Produkt wird nach der allgemeinen Arbeitsvorschrift B durch Umsetzung von 100 g des polymeren Phenols II und 25 g N-(2-Aminoethyl)-piperazin erhalten.

In den folgenden Beispielen bedeuten Mengenangaben Gewichtsteile, sofern dies nicht anderweitig angegeben ist.

Beispiele 1-20: Man bereitet härtbare Gemische, indem man jeweils einen der Härter I bis XX in einem Diglycidylether auf Bisphenol A Basis mit einem Epoxidgehalt von 5,2 Aequ./kg of einem Dreiwalzenmischer dispergiert.

Die Gelierungszeiten dieser Mischungen bei unterschiedlichen Temperaturen werden ermittelt, indem man etwa 0,1 g der betreffenden Mischung auf einen auf die betreffende Temperatur vorgeheizten Metallblock aufbringt und die die für Gelierung erforderliche Zeit beobachtet. Zur Ermittlung der Lagerstabilität werden die Proben bei Raumtemperatur (25°C) gelagert.

Menge und Art der verwendeten Härter, die Gelierungszeiten und Lagerstabilitäten der hergestellten Mischungen sind in der folgenden Tabelle aufgeführt.

Tabelle 1:

| Beisp. Nr. | Härter | Menge[1)] | Gelierungszeit bei unterschiedlichen Temperaturen (Minuten) 80°C | 100°C | 120°C | Lagerstabilität |
|---|---|---|---|---|---|---|
| 1 | I | 50 | 2 | - | - | Grösser als zwei Jahre |
| 2 | II | 50 | - | - | 0,5 | Grösser als ein Jahr |
| 3 | III | 70 | 15 | - | - | Sechs Monate |
| 4 | IV | 50 | 4 | - | - | Ein Jahr |
| 5 | V | 50 | 2 | 1,3 | 0,6 | Sechs Wochen |
| 6 | VI | 50 | 4 | - | - | Mehr als ein Jahr |
| 7 | VII | 50 | 2 | 0,5 | - | Zehn Monate |
| 8 | VIII | 120 | 1,8 | 1,2 | 1 | Zwei Wochen |
| 9 | IX | 85 | 1,8 | 1,2 | 0,6 | Sechs Wochen |
| 10 | X | 50 | - | 5 | - | Ein Jahr |
| 11 | XI | 100 | - | - | 1 | Ein Jahr |
| 12 | XII | 100 | - | - | 1 | Mehr als ein Jahr |
| 13 | XIII | 50 | 2 | - | - | Vier Wochen |
| 14 | XIV | 72 | 2 | - | - | Mehr als ein Jahr |
| 15 | XV | 75 | 15 | 1 | 0,75 | Drei Monate |
| 16 | XVI | 100 | 7 | 1,3 | 1 | Fünf Monate |
| 17 | XVII | 120 | 10 | 1 | 0,75 | Zwei Wochen |
| 18 | XVIII | 50 | - | - | 0,5 | Ein Monat |
| 19 | XIX | 90 | 2 | - | - | Mehr als ein Jahr |
| 20 | XX | 70 | 5 | - | - | Vier Monate |

1) Teile Härter auf 100 Teile Diglycidylether

Beispiele 21-23: Man bereitet härtbare Gemische durch Dispergieren der Härter XXI bis XXII in einem Gemisch aus einem Diglycidylether auf Bisphenol-A Basis (Epoxidgehalt: 5,2 Aequ./kg) und hochdisperse Kieselerde. In Beispiel XXIII wird Härter XXIII verwendet; in dieser Formulierung ist die Kieselerde weggelassen.

Die Gelierungszeiten der Gemische bei unterschiedlichen Temperaturen und die Lagerstabilitäten bestimmt man wie in Beispielen 1 bis 20 beschrieben.

Mengen und Art der verwendeten Komponenten, die Gelierungszeiten und die Lagerstabilitäten findet man in der folgenden Tabelle 2.

Tabelle 2:

| Beispiel Nr. | Komponenten | Mengen (Teile) | Gelierungszeit bei unterschiedlichen Temperaturen (Minuten) 80°C | 100°C | Lagerstabilität |
|---|---|---|---|---|---|
| 21 | Epoxidharz<br>Härter XXI<br>Kieselerde | 100<br>40<br>4 | 14,5 | 2,5 | Mehr als drei Monate |
| 22 | Epoxidharz<br>Härter XXII<br>Kieselerde | 100<br>54<br>4 | 5,5 | 0,8 | Mehr als fünf Wochen |
| 23 | Epoxidharz<br>Härter XXIII | 100<br>50 | - | 2 | Mehr als ein Jahr |

Die Zusammensetzung gemäss Beispiel 23 geliert bei 120 °C in 1,25 Minuten.

Beispiel 24: 2 g der Zusammensetzung gemäss Beispiel 1 werden in eine kleine Polyethylenform gegeben und auf 60 °C erhitzt. Die Mischung geliert in 20 Minuten.

Beispiel 25: 1 g der Mischung gemäss Beispiel 4 werden in eine kleine Polyethylenform gegeben und auf 60 °C erhitzt. Die Mischung geliert in 30 Minuten.

Beispiel 26: Mit der Mischung gemäss Beispiel 1 werden überlappende Klebverbindungen auf entfettetem und aufgerauhtem Blech einer Aluminiumlegierung (2L 73 Alclad) von 12,5 mm • 25 mm hergestellt. Die Anordnung wird zwei Stunden bei 80 °C gehärtet. Die Zugscherfestigkeit der Klebverbindung beträgt 13 MPa.

Beispiel 27: Man wiederholt das Verfahren von Beispiel 26 und verwendet die Mischung gemäss Beispiel 2. Die Härtung erfolgt eine Stunde lang bei 120 °C. Die Zugscherfestigkeit der gehärteten Probe beträgt 17,6 MPa.

Beispiel 28: Man wiederholt das Verfahren von Beispiel 26 und verwendet die Mischung gemäss Beispiel 3. Die Härtung erfolgt zwei Stunden lang bei 80 °C. Die Zugscherfestigkeit der gehärteten Probe beträgt 14 MPa.

Beispiel 29: Man vermischt 10 g eines Diglycidylethers auf Bisphenol-A Basis (Epoxidgehalt: 5,2 Aequ./kg) mit 7 g des Härters III auf einem Dreiwalzenstuhl. Mit einem Teil der hergestellten Mischung füllt man eine Form der Abmessungen 75 mm • 25 mm • 3 mm und härtet eine Stunde bei 80 °C. Man erhält einen Giessling mit einer Biegefestigkeit von 70,4 MN/$m^2$.

Beispiel 30: Man wiederholt Beispiel 29 und verwendet 5 g Härter II anstelle von Härter III und härtet eine Stunde bei 120 °C. Man erhält einen Gieskörper mit einer Biegefestigkeit von 96,7 MN/$m^2$.

## Patentansprüche

1. Latent härtbare flüssige Zusammensetzungen enthaltend
   a) ein bei 25 °C flüssiges Epoxidharz, und
   b) mehr als 10 Gew.%, bezogen auf die Menge an A), einer festen Lösung aus einem polymeren Phenol und einem Polyamin mit wenigstens zwei Aminogruppen, wovon wenigstens eine dieser Gruppen eine primäre Aminogruppe ist, als Härter für A), mit der Massgabe, dass besagte feste Lösung als Pulver in besagtem Epoxidharz dispergiert ist.

2. Zusammensetzungen gemäss Anspruch 1, worin das Epoxidharz A) ein Polyglycidylether, ein Polyglycidylester, ein N,N'-Diglycidylhydantion oder ein Poly-(N-glycidyl)-derivat eines aromatischen Amins ist.

3. Zusammensetzungen gemäss Ansprüchen 1 oder 2, worin das polymere Phenol ein Homopolymeres oder ein Copolymeres eines Phenols ist, das eine polymerisierbare ethylenisch ungesättigte Gruppe als Substituenten trägt, oder ein phenolisches Novolakharz ist.

4. Zusammensetzungen gemäss Anspruch 3, worin das polymere Phenol die allgemeine Formel II besitzt

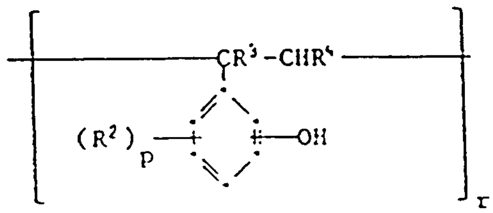 (II),

worin $R^2$ ein Halogenatom ist oder Hydroxyl, Alkyl, Alkoxy, Aryl, Aralkyl oder Hydroxyalkyl darstellt,
$R^3$ und $R^4$ unabhängig voneinander Wasserstoff oder geradkettiges oder verzweigtes $C_1$-$C_4$-Alkyl bedeuten,
p 0 oder eine ganze Zahl von 1 bis 4 ist, und
r eine ganze Zahl ist, so dass das mittlere Molekulargewicht des Polymeren im Bereich von 1'500 bis 30'000 liegt.

5. Zusammensetzungen gemäss Anspruch 4, worin $R^2$ ein Halogenatom ist, $R^3$ und $R^4$ Wasserstoffatom darstellen und p 0 oder 1 ist.

6. Zusammensetzungen gemäss Anspruch 3, worin das polymere Phenol ein phenolischer Novolak ist, der sich von einem einkernigen Phenol und einem Aldehyd ableitet.

7. Zusammensetzungen gemäss Anspruch 6, worin der Novolak die Struktur der Formel IV besitzt

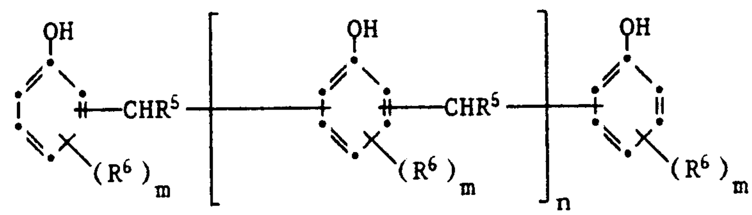 (IV),

worin
$R^5$ Wasserstoff, Alkyl oder Aryl ist,
$R^6$ $C_1$-$C_{10}$-Alkyl bedeutet,
m 0 ist oder eine ganze Zahl von 1 bis 3 bedeutet und
n eine solche Zahl darstellt, dass der Durchschnittswert zwischen 1 und 20 liegt.

8. Zusammensetzungen gemäss Anspruch 7, worin n einen Mittelwert von 1 bis 10 annimmt, $R^5$ Wasserstoff ist, m 0 bedeutet oder m 1 ist und $R^6$ $C_1$-$C_4$-Alkyl bedeutet oder m für einige der aromatischen Ringe in Formel IV 0 ist und für den Rest 1 bedeutet, wobei $R^6$ $C_1$-$C_4$-Alkyl ist.

9. Zusammensetzungen gemäss Anspruch 3, worin das polymere Phenol ein phenolisches Novolakharz ist, das sich von einem Bisphenol und einem Aldehyd ableitet.

10. Zusammensetzungen gemäss Anspruch 9, worin das Novolakharz sich von Bisphenol A und Formaldehyd ableitet.

11. Zusammensetzungen gemäss Anspruch 1 worin die feste Lösung B) sich von einem Polyamin mit wenigstens zwei primären Aminogruppen oder mit einer primären Aminogruppe und wenigstens einer sekundären Aminogruppe ableitet.

**12.** Zusammensetzungen gemäss Anspruch 11, worin das Polyamin ausgewählt wird aus der Gruppe bestehend aus Polyalkylenpolyamin, Aralkylendiamin, Aminoalkylalkylendiamin, N,N-Bis-(aminoalkyl)-alkylamin, Tris-(aminoalkyl)-amin, cycloaliphatischem diprimärem Amin, N-Aminoalkylpiperazin, Polyalkylenimin und Polyaminoamid.

**13.** Zusammensetzungen gemäss Anspruch 1, worin das Gewichtsverhältnis von polymerem Phenol zu Polyamin in der festen Lösung B) im Bereich von 0,5:1 bis 5:1 liegt.

**14.** Zusammensetzungen gemäss Anspruch 1, worin 15 bis 150 Gew.% an fester Lösung B), bezogen auf das Epoxidharz A), vorliegen.

**15.** Verfahren zum Härten einer Zusammensetzung gemäss Anspruch 1, dadurch gekennzeichnet, dass man besagte Zusammensetzung auf eine Temperatur zwischen 60 bis 200 °C erhitzt.

**16.** Verfahren zum Verbinden zweier Oberflächen, dadurch gekennzeichnet, dass man eine Zusammensetzung gemäss Anspruch 1 auf eine oder zwei der Oberflächen aufbringt, diese Oberflächen miteinander verbindet, so dass sich besagte Zusammensetzung dazwischen befindet und die entstandene Anordnung erhitzt bis die Zusammensetzung ausgehärtet ist.

## Claims

**1.** A latent-curable liquid composition comprising
a) an epoxy resin which is liquid at 25 °C, and
b) more than 10 % by weight, based on the amount of A), of a solid solution of a polymeric phenol and a polyamine having at least two amino groups, at least one of these groups being a primary amino group as curing agent for A), with the proviso that said solid solution is dispersed as a powder in said epoxy resin.

**2.** A composition according to claim 1, in which the epoxy resin A) is a polyglycidyl ether, a polyglycidyl ester, an N,N'-diglycidylhydantion [sic] or a poly(N-glycidyl) derivative of an aromatic amine.

**3.** A composition according to claims 1 or [sic] 2, in which the polymeric phenol is a homopolymer or copolymer of a phenol substituted by a polymerisable ethylenically unsaturated group, or a phenolic novolak resin.

**4.** A composition according to claim 3, in which the polymeric phenol has the general formula II

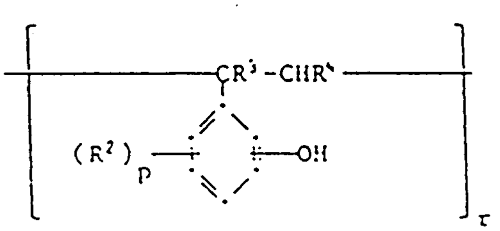

(II)

in which $R^2$ is a halogen atom or is hydroxyl, alkyl, alkoxy, aryl, aralkyl or hydroxyaralkyl,
$R^3$ and $R^4$ are independently of one another hydrogen or straight-chain or branched $C_1$-$C_4$ alkyl,
p is 0 or an integer from 1 to 4, and
r is an integer such that the average molecular weight of the polymer is within the range from 1,500 to 30,000.

**5.** A composition according to claim 4, in which $R^2$ is a halogen atom, $R^3$ and $R^4$ represent a hydrogen atom and p is 0 or 1.

**6.** A composition according to claim 3, in which the polymeric phenol is a phenolic novolak derived from a mononuclear phenol and an aldehyde.

**7.** A composition according to claim 6, in which the novolak has the structure of formula IV

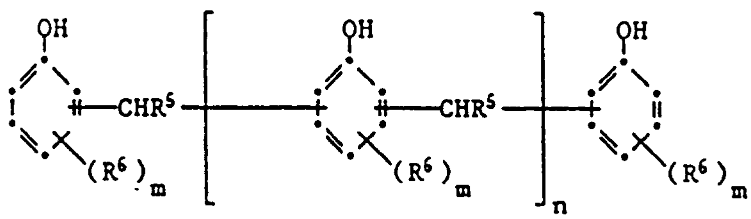

(IV)

in which $R^5$ is hydrogen, alkyl or aryl,

$R^6$ is $C_1$-$C_{10}$alkyl,

m is 0 or an integer from 1 to 3, and

n represents an integer such that the average value is between 1 and 20.

**8.** A composition according to claim 7, in which n adopts an average value from 1 to 10, $R^5$ is hydrogen, m is 0 or m is 1 and $R^6$ is $C_1$-$C_4$alkyl, or m is 0 for some of the aromatic rings in formula IV and is 1 for the remainder, $R^6$ being $C_1$-$C_4$alkyl.

**9.** A composition according to claim 3, in which the polymeric phenol is a phenolic novolak resin derived from a bisphenol and an aldehyde.

**10.** A composition according to claim 9, in which the novolak resin is derived from bisphenol A and formaldehyde.

**11.** A composition according to claim 1, in which the solid solution B) is derived from a polyamine having at least two primary amino groups, or one primary amino group and at least one secondary amino group.

**12.** A composition according to claim 11, in which the polyamine is selected from the group comprising polyalkylenepolyamine, aralkylenediamine, aminoalkylalkylenediamine, N,N-bis(aminoalkyl)alkylamine, tris(aminoalkyl)amine, cycloaliphatic diprimary amine, N-aminoalkylpiperazine, polyalkyleneimine and polyaminoamide.

**13.** A composition according to claim 1, in which the weight ratio of polymeric phenol to polyamine in the solid solution B) is within the range from 0.5:1 to 5:1.

**14.** A composition according to claim 1 which contains from 15 to 150 % by weight of solid solution B) based on the epoxy resin A).

**15.** A method of curing a composition according to claim 1, which comprises heating said composition at a temperature between 60 to [sic] 200 ° C.

**16.** A method of joining two surfaces, which comprises applying a composition according to claim 1 to one or two of the surfaces, joining these surfaces together with said composition positioned therebetween and heating the resulting assembly until the composition is cured.

**Revendications**

**1.** Une composition liquide durcissable comprenant :

(A) une résine époxyde liquide, et

(B) comme agent de polymérisation pour (A), plus de 10% du poids de (A), d'une solution solide d'un phénol polymérique et d'une polyamine ayant au moins 2 groupements amine, l'un d'entre eux au moins étant un groupement amine primaire, ladite solution solide étant dispersée sous forme d'une poudre dans la résine époxyde.

**2.** Une composition selon la Revendication 1 dans laquelle la résine époxyde (A) est un éther polyglycidylique, un ester polyglycidylique, une N,N'-diglycidylhydantoïne ou un dérivé poly(N-glycidylique) d'une

amine aromatique.

**3.** Une composition selon la Revendication 1 ou 2, dans laquelle le phénol polymérique est un homopolymère ou un copolymère d'un phénol substitué par un groupement à insaturation éthylénique polymérisable ou une résine novolaque phénolique.

**4.** Une composition selon la Revendication 3, dans laquelle le phénol polymérique a la formule générale :

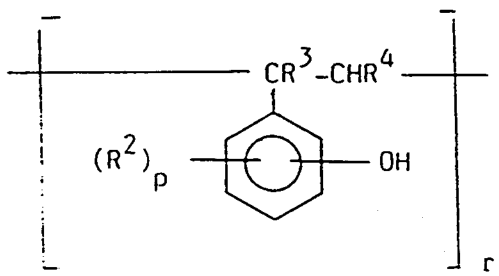

II

dans laquelle :

$R^2$ représente un atome d'halogène ou un groupement hydroxy, alkyle, alkoxy, aryle, aralkyle ou hydroxyaralkyle,

$R^3$ et $R^4$ sont identiques ou différents et représentent chacun un atome d'hydrogène ou un groupement alkyle ramifié ou une chaîne linéaire ayant de 1 à 4 atomes de carbone,

p représente zéro ou un entier qui est compris entre 1 et 4, et

r représente un entier tel que la masse moléculaire moyenne du polymère est comprise à l'intervalle 1.500-30.000.

**5.** Une composition selon la Revendication 4, dans laquelle $R^2$ représente un atome d'halogène, $R^3$ et $R^4$ représentent des atomes d'hydrogène et p représente zéro ou 1.

**6.** Une composition selon la Revendication 3, dans laquelle le phénol polymérique est une résine novolaque phénolique préparée à partir d'un phénol mononucléaire et d'un aldéhyde.

**7.** Une composition selon la Revendication 6, dans laquelle la résine novolaque a la formule :

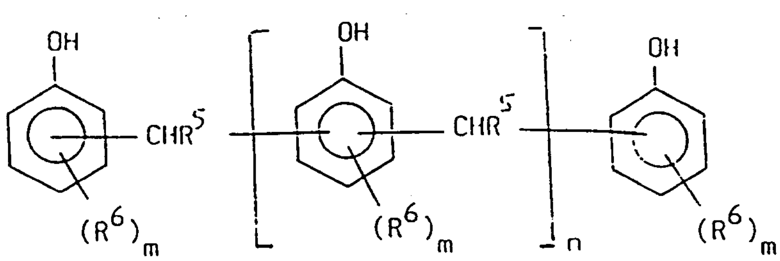

IV

dans laquelle :

$R^5$ représente un atome d'hydrogène ou un groupement alkyle ou aryle,

$R^6$ représente un groupement alkyle de 1 à 10 atomes de carbone,

m représente zéro ou un entier compris entre 1 et 3, et

n représente un entier ayant une valeur moyenne à l'intérieur de l'intervalle allant de 1 à 20.

**8.** Une composition selon la Revendication 7, dans laquelle n désigne un entier ayant une valeur moyenne comprise entre 1 et 10,

$R^5$ représente un atome hydrogène, et

m vaut zéro, ou

m vaut 1 et chaque $R^6$ désigne un groupement alkyle de 1 à 4 atomes de carbone, ou

m vaut zéro pour certains des cycles aromatiques indiqués dans la Formule IV et vaut 1 pour le

restant de ceux-ci, $R^5$ désignant un groupement alkyle de 1 à 4 atomes de carbone.

**9.** Une composition selon la Revendication 3, dans laquelle le phénol polymérique est une résine novolaque phénolique préparée à partir de bisphénol et d'un aldéhyde.

**10.** Une composition selon la Revendication 9, dans laquelle la résine novolaque est préparée à partir de bisphénol A et de formaldéhyde.

**11.** Une composition selon l'une quelconque des revendications précédentes, dans laquelle la solution solide (B) est préparée à partir d'une polyamine ayant au moins 2 groupements amines primaires, ou un groupement amine primaire et au moins un groupement amine secondaire.

**12.** Une composition selon la Revendication 11, dans laquelle la polyamine est une polyalkylènepolyamine, une aralkylènediamine, une aminoalkylènediamine, une N,N-bis(aminoalkyl)alkylamine, une tris-(aminoalkyle)amine, une amine diaprimaire cycloaliphatique, une N-aminoalkylpipérazine, une polyalkylèneimine ou une polyaminoamide.

**13.** Une composition selon l'une quelconque des revendications précédentes, dans laquelle le rapport pondéral du phénol polymérique à la polyamine dans la solution solide (B) est compris dans un intervalle allant de 0,5:1 à 5:1.

**14.** Une composition selon l'une quelconque des revendications précédentes, qui contient de 15 à 150% de la solution solide (B) en poids de la résine époxyde (A).

**15.** Un procédé de cuisson d'une composition selon l'une quelconque des Revendications 1 à 14 qui comprend le chauffage de la composition à une température comprise entre 60 °C et 200 °C.

**16.** Un procédé de fixation de collage de deux surfaces ensemble qui comprend l'application d'une composition selon l'une quelconque des revendications 1 à 14 à l'une ou aux deux surfaces, la mise en place des deux surfaces en contact avec la composition positionnée entre elles et le chauffage de l'assemblage résultant jusqu'à ce que la composition soit durcie.